Europäisches Patentamt

European Patent Office

Office européen des brevets

(19)

(11) Numéro de publication : **0 504 046 A1**

(12) # DEMANDE DE BREVET EUROPEEN

(21) Numéro de dépôt : **92400635.6**

(22) Date de dépôt : **11.03.92**

(51) Int. Cl.⁵ : **F16L 33/22, F16L 37/12**

(30) Priorité : **11.03.91 FR 9102904**

(43) Date de publication de la demande :
**16.09.92 Bulletin 92/38**

(84) Etats contractants désignés :
**BE ES FR IT PT**

(71) Demandeur : **HUTCHINSON S.A.**
**2 rue Balzac**
**F-75008 Paris (FR)**

(72) Inventeur : **Alechaga, Alain**
**8bis, rue des Ecoliers**
**F-37320 Saint Branchs (FR)**
Inventeur : **Ladouce, Jacques**
**La Girardière**
**F-37240 La Chapelle Blanche (FR)**
Inventeur : **Blin, Philippe**
**La Marquinière**
**F-37260 Monts (FR)**

(74) Mandataire : **Doireau, Marc et al**
**Cabinet Orès 6, avenue de Messine**
**F-75008 Paris (FR)**

(54) **Dispositif pour raccorder une extrémité d'un tube en caoutchouc sur un embout.**

(57)    Le dispositif de raccordement d'une extrémité d'un tube (1) en caoutchouc sur un about (2) est constitué d'un raccord (10) comprenant au moins une pièce de liaison (11) formée d'un élément tubulaire (12) raccordé à l'extrémité du tube (1) et d'une griffe (13) élastiquement déformable destinée à enserrer l'extrémité de l'about (2) avec compression concomitante d'un joint d'étanchéité (35), et une bague (25) de blocage axial de la griffe (13) sur l'about (2).
   Application aux tubes gaz pour cuisinières par exemple.

FIG.1b

EP 0 504 046 A1

La présente Invention concerne un dispositif pour raccorder une extrémité d'un tube en caoutchouc sur un embout, du type constitué par un raccord comprenant une pièce de liaison formée d'un élément tubulaire destiné à être raccordé à l'extrémité du tube, et d'une griffe qui prolonge axialement l'élément tubulaire et qui comporte plusieurs doigts axiaux destinés à entourer l'embout, un joint d'étanchéité annulaire logé à l'intérieur de la griffe et une bague de blocage à déplacement axial montée autour de la griffe.

D'une manière générale, il est courant d'utiliser dans de nombreuses applications industrielles des tubes en caoutchouc pour véhiculer un agent pneumatique ou fluidique entre une source d'alimentation et un appareil d'utilisation par exemple. Pour certaines applications, il peut suffire d'emmancher à force l'extrémité du tube côté source et/ou côté appareil sur un embout pour réaliser un raccordement étanche avec une tenue mécanique suffisante.

Ce type de raccordement est d'ailleurs celui qui est notamment utilisé en électroménager pour raccorder une cuisinière à un robinet distributeur de gaz de ville ou à un détendeur d'une bouteille de gaz, selon les normes en vigueur. Plus précisément, les embouts alors dénommés abouts sont métalliques et annelés selon la norme NF-D-36 109 pour le gaz butane et la norme NF-D-36 111 pour le gaz de ville, alors que les tubes en caoutchouc dénommés tubes gaz ont une constitution qui doit satisfaire la norme NF-D-36 101 pour le gaz butane et la norme NF-D-36 102 pour le gaz de ville. D'une manière générale, un tube gaz est constitué d'un tube en caoutchouc qui doit résister, côté intérieur, à l'action physico-chimique de l'agent véhiculé et, côté extérieur, aux contraintes de l'environnement ambiant.

Le GAZ DE FRANCE analyse scrupuleusement tous les accidents occasionnés par le gaz pour tenter d'y remédier. Concrètement, ces accidents sont heureusement peu nombreux, mais il s'avère que ceux qui surviennent au niveau des canalisations de distribution du gaz, en amont des compteurs individuels ou collectifs, sont en diminution constante, alors que ceux qui surviennent en aval de ces compteurs restent sensiblement constants. Or, pour ces derniers accidents, il s'avère également que ce ne sont pas les tubes gaz qui sont spécialement incriminés, dès l'instant où les usagers prennent toutefois la précaution de les changer périodiquement (avant la fin de la cinquième année d'utilisation selon la norme), mais les raccordements du tube gaz sur l'about de la cuisinière d'une part et sur l'about de robinet mural de distribution de gaz d'autre part.

Les opérations de raccordement d'un tube gaz sur ces abouts s'effectuent directement par emmanchement à force et elles sont généralement effectuées par les usagers eux-mêmes. Un premier facteur d'accidents résulte des trois diamètres normalisés des tubes gaz, à savoir 12, 15 et 20 mm pour l'application gaz de ville. En effet, une erreur due à l'achat précipité par exemple d'un tube gaz non adapté au diamètre de l'about entraînera nécessairement un raccordement défectueux, car l'usager cherchera par tous les moyens à réaliser le raccordement. Par contre, ce risque d'erreur n'existe pas pour l'application gaz en bouteille, car le diamètre du tube gaz est normalisé à 6 mm. Un second facteur d'accidents résulte du mode de raccordement qui se fait par emmanchement à force, aussi bien pour les applications gaz de ville que gaz en bouteille. En effet, un tel emmanchement peut s'avérer insuffisant, notamment lorsqu'il est réalisé par une personne âgée, et le moindre effort de traction exercé sur le tube pourra occasionner une fuite de gaz.

Pour pallier ces risques d'accidents, le GAZ DE FRANCE a essayé de préconiser le remplacement des tubes gaz par des flexibles présentant des embouts sertis qui viennent se monter sur des pas de vis côté robinet de distribution du gaz et côté cuisinière, mais cela nécessite le démontage préalable des abouts qui deviennent inutiles, à condition que ceux-ci soient démontables, ce qui n'est pas toujours le cas. De tels flexibles correspondent à la norme NF-D-36 103. Cependant, cette tentative s'est soldée par un échec au niveau des consommateurs, en premier lieu à cause du prix de ces flexibles de l'ordre de 130,00 FF, alors que le tube gaz classique ne coûte qu'environ 20,00 FF, et en second lieu par la nécessité qu'il y a pour les usagers de démonter les abouts, à condition que cela soit possible.

Une seconde tentative plus récente a été faite par le GAZ DE FRANCE en essayant de préconiser des tuyaux entièrement métalliques selon la norme NF-D-36 121, mais là encore il y a eu échec au niveau des consommateurs, un tel tuyau métallique étant d'un coût élevé de l'ordre de 500,00 FF.

Un dispositif de raccordement du type précité, est décrit dans le document FR-A-342 467. Dans ce dispositif, l'extrémité de chaque doigt de la griffe est recourbée vers l'intérieur pour former une pince. La bague de blocage est montée coulissante sur la douille formant la griffe, et elle comprime les pinces autour de l'about lorsqu'elle est en position de blocage.

Cependant, un tel dispositif de raccordement n'est pas apte à assurer une immobilisation axiale ayant une tenue suffisante capable de résister à des efforts de traction de l'ordre de 80 kg, comme cela est imposé par les normes GAZ DE FRANCE.

L'Invention a notamment pour but de pallier cet inconvénient tout en procurant d'autres avantages, et elle peut s'appliquer au raccordement d'un tube souple sur un embout quelconque, un about gaz n'étant qu'un exemple d'application.

A cet effet, l'Invention propose un dispositif de raccordement du type précité et qui est caractérisé en ce que la surface périphérique interne de la bague de blocage comporte une partie tronconique et une partie cylindrique axialement alignées et dans le prolongement l'une de l'autre, la partie tronconique étant destinée à prendre progressivement appui sur la surface périphérique externe des doigts pour les comprimer radialement sur l'embout lors du déplacement axial de la bague de blocage.

Selon un premier mode de réalisation de l'Invention, plus particulièrement adapté pour un embout de type annelé, la griffe de la pièce de liaison du raccord présente des doigts qui ont un profil intérieur sensiblement complémentaire de celui de l'embout pour venir en prise avec celui-ci, le joint d'étanchéité en appui contre un épaulement annulaire interne de la pièce de liaison étant mis en compression axiale par la surface d'extrémité libre de l'embout, lorsque celui-ci est engagé dans la griffe du raccord.

Selon une autre caractéristique de ce premier mode de réalisation, la surface périphérique externe des doigts de la griffe délimite une enveloppe de forme tronconique qui est complémentaire de celle présentée par la partie tronconique interne de la bague de blocage.

Dans ce premier mode de réalisation, il est à noter que le joint d'étanchéité est essentiellement mis en compression axiale.

Selon un second mode de réalisation de l'Invention, le joint d'étanchéité est placé entre l'embout et les doigts de la griffe, et le déplacement axial de la bague de blocage telle une bague-écrou entraîne une compression radiale du joint d'étanchéité dont la surface périphérique interne se déforme pour venir épouser la forme de l'embout.

Un tel dispositif de raccordement, tant selon le premier que selon le second mode de réalisation, est avantageusement préassemblé à chaque extrémité d'un tube en caoutchouc par exemple et en particulier un tube gaz pour former un ensemble dénommé flexible prêt à la commercialisation. Ainsi, pour l'usager, l'opération de raccordement du flexible sur un embout se limite à engager la griffe du raccord sur l'extrémité libre annelée de l'embout, jusqu'à ce que le joint d'étanchéité soit mis en compression, et à agir ensuite sur la bague de blocage par translation et/ou rotation pour immobiliser axialement le raccord, avec éventuellement présence d'un dispositif de verrouillage de la bague.

Un tel dispositif de raccordement est donc du type raccord à montage et démontage rapide sans qu'il soit nécessaire de recourir à un outil.

En outre, un tel dispositif présente les avantages d'être auto-obturant, de ne nécessiter aucun effort particulier pour son montage et d'avoir une tenue mécanique suffisante qui lui permet de résister à des forces de traction de l'ordre de 80 kilos environ pour le gaz de ville.

D'autres avantages, caractéristiques et détails ressortiront de la description explicative qui va suivre faite en référence aux dessins annexés, donnés uniquement à titre d'exemple, et dans lesquels :
 – les figures 1a et 1b sont des vues en coupe longitudinale d'un dispositif de raccordement selon un premier mode de réalisation de l'Invention, et montrant respectivement le dispositif avant et après montage sur un embout annelé ;
 – la figure 2 est une vue en coupe longitudinale partielle du dispositif de raccordement précédent associé à un dispositif d'obturation de l'écoulement d'un fluide au travers du dispositif de raccordement ;
 – et les figures 3a et 3b sont des demi-vues en coupe longitudinale d'un dispositif de raccordement selon un second mode de réalisation de l'Invention, et montrant respectivement ce dispositif avant et après montage sur un embout annelé.

Le dispositif de raccordement selon l'Invention tel qu'illustré sur les figures permet de raccorder une extrémité 1a d'un tube 1 en caoutchouc sur un embout qui, dans l'exemple considéré ici est un embout annelé 2. Ce dispositif est constitué par un raccord 10 qui présente une pièce de liaison 11 formée d'un élément tubulaire 12 prolongé axialement à une extrémité par une griffe 13.

La griffe 13 est formée de plusieurs doigts 14 élastiquement déformables qui sont de préférence angulairement régulièrement répartis autour de l'axe longitudinal de la griffe 13.

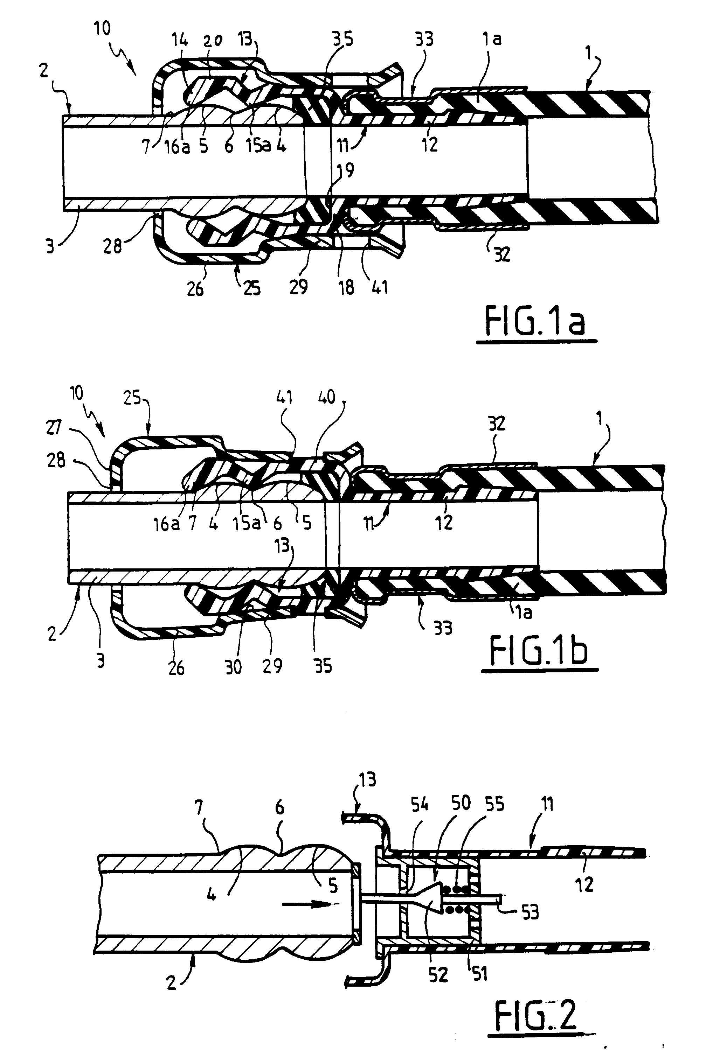

Selon le premier mode de réalisation représenté aux figures 1a et 1b, chaque doigt 14 a globalement une section en forme de denture en coupe longitudinale et une section en forme d'arc de cercle en coupe transversale. Dans l'exemple considéré ici, chaque doigt 14 présente dans le sens axial et en direction de son extrémité libre un premier redan 15 qui délimite une première dent interne 15a suivie d'un deuxième redan 16 qui délimite une deuxième dent interne 16a. Les deux dents internes 15a et 16a sont séparées d'une distance _l_ qui est en relation avec la forme annelée de l'embout 2, comme cela sera explicité plus loin.

Les doigts 14 sont raccordés à l'élément tubulaire 12 par une partie annulaire radiale 18 qui délimite un épaulement interne 19.

La surface périphérique externe délimitée par les doigts 14 de la griffe 13 est de forme globalement tronconique et constitue une portée externe 20.

Le raccord 10 est complété par une bague de blocage coulissante 25 qui présente une partie cylindrique 26 avec à une extrémité un rebord annulaire 27 qui délimite une ouverture 28. A son autre extrémité, la partie cylindrique 26 se prolonge par une partie tronconique 29 de diamètre décroissant et qui délimite à sa périphérie interne une portée tronconique 30 complémentaire de la portée tronconique externe 20 délimitée par la griffe 13.

Il va être décrit maintenant le principe de montage de ce raccord 10 sur l'about 2. Concrètement, cette phase de montage est précédée d'une phase d'assemblage du raccord 10 sur l'extrémité 1a du tube de gaz, comme cela est représenté à la figure 1a.

Une douille métallique 32 est rapportée librement sur l'extrémité du tube 1, et l'élément tubulaire 12 de la pièce de liaison 11 est emmanché par son extrémité libre dans l'extrémité du tube 1. La douille 32 est ensuite sertie en 33 par déformation à froid du métal par action de forces de compression par exemple radiales pour renforcer la solidarisation entre l'élément tubulaire 12 et le tube 1.

Un joint d'étanchéité annulaire 35 est logé à l'intérieur de la griffe 13 et vient en appui contre l'épaulement annulaire 19 délimité entre la griffe 13 et l'élément tubulaire 12.

Enfin, la bague de blocage 25 est rapportée axialement sur la pièce de liaison 11 en engageant la griffe 13 dans la partie tronconique de la bague 25. Cet engagement provoque une déformation élastique des doigts 14 de la griffe 13 au passage de la partie tronconique 30, mais ils reprennent leur état initial lorsqu'ils atteignent la partie cylindrique 26 de plus grand diamètre de la bague 25.

Un raccord 10 est ainsi préassemblé à chaque extrémité du tube 1 et forme un flexible symétrique prêt à être commercialisé. Il va être considéré ci-après le montage d'un raccord 10 du flexible sur l'embout annelé 2 d'un robinet de distribution du gaz de ville par exemple, comme cela est représenté à la figure 1b.

L'embout annelé 2 solidaire du robinet de distribution du gaz (non représenté) présente une partie cylindrique 3 prolongée par deux bossages annulaires consécutifs 4 et 5, le bossage 5 se situant à l'extrémité de l'embout 2. Entre les deux bossages 4 et 5, il est délimité ainsi une gorge annulaire externe 6, et entre le bossage 4 et son raccordement à la partie cylindrique 3 de l'embout 2, il est délimité une seconde gorge annulaire 7, la distance séparant ces deux gorges 6 et 7 étant sensiblement égale à la distance *1* séparant les dents internes 15a et 16a de chaque doigt 14 de la griffe 13.

Pour assembler le raccord 10 à l'embout 2, il suffit de faire pénétrer axialement ce dernier par l'ouverture 28 de la bague de blocage 25. Lors de ce mouvement, les doigts 14 de la griffe 13, logés dans la partie cylindrique 26 de la bague 25, se déforment lorsque les bossages 4 et 5 de l'embout 2 viennent au contact des dents internes 15a et 16a des doigts 14.

L'extrémité libre de l'embout 2 vient ensuite au contact du joint d'étanchéité 35 qui va alors se comprimer avec déformation de sa zone annulaire interne. L'usager cesse son action dès qu'il sent une résistance sensible à l'avancement qui correspond au moment où les dents 15a et 16a des doigts 14 se trouvent respectivement situées au niveau des gorges 6 et 7 de l'embout 2. Les dents retiennent ainsi le joint d'étanchéité 35 en compression, mais elles ne sont pas pour autant situées nécessairement dans le fond des gorges 6 et 7 associées. Ensuite, l'usager fait coulisser axialement la bague de blocage 25 du raccord 10 en direction de l'embout 2 pour amener en contact positif les portées tronconiques complémentaires 20 et 30 de la griffe 13 et de la bague 25, respectivement. Le déplacement de la bague de blocage 25 en direction de l'embout 2 entraîne deux conséquences. La première est de comprimer radialement vers l'intérieur les doigts 14 de la griffe 13 tout en amenant leurs dents internes 15a et 16a dans le fond des gorges 6 et 7 associées, ce qui entraîne comme seconde conséquence un effort complémentaire de compression axiale exercé sur le joint d'étanchéité 35.

Avantageusement, le raccord 10 peut être verrouillé en position au moyen de pions externes 40 prévus à la surface périphérique externe de la griffe 14, au voisinage de sa zone de raccordement avec l'embout 11. Ces pions 40 sont destinés à venir se loger respectivement dans des ouvertures 41 prévues dans la partie tronconique 29 de la bague 25. Ainsi, l'usager sait que lorsqu'il aura amené les pions 40 dans les ouvertures 41, le raccord 10 se trouvera bloqué axialement sur l'embout 2 et verrouillé en position. Pour parvenir à loger les pions 40 dans les ouvertures 41, il est bien évidemment possible que l'usager soit amené à faire subir une rotation à la bague 25.

Le principe de montage du raccord 10 tel que décrit précédemment a été volontairement décomposé en deux opérations : la première consistant à engager l'embout 2 dans la griffe 13 du raccord 10 avec une première compression axiale du joint d'étanchéité 35, et la seconde consistant à déplacer la bague de blocage 25 en direction de l'embout 2 pour assurer le blocage axial du raccord 10 avec une seconde compression axiale du joint d'étanchéité. Concrètement, l'usager peut enchaîner ces deux opérations d'une manière continue.

Il est à noter que la présence du dispositif de verrouillage 40 et 41 offre une certaine sécurité pour l'usager. En effet, si l'opération de raccordement s'exécute normalement et sans effort particulier, les pions 40 vont venir se loger dans les ouvertures 41 associées, ce qui indique à l'usager qu'il a raccordé un flexible de bon diamètre et que le raccordement sur l'embout 2 a été correctement effectué.

Pour augmenter cette sécurité, le dispositif de raccordement peut être associé à un obturateur 50 selon un montage schématiquement représenté à la figure 2.

L'obturateur 50 comprend par exemple un corps cylindrique 51 dans lequel est logé un clapet 52 prolongé axialement de part et d'autre par une tige 53 qui fait respectivement saillie aux deux extrémités du corps 51. Le clapet 52 est maintenu en appui sur un siège 54 par l'intermédiaire d'un ressort 55. Un tel obturateur 50 est engagé librement dans la partie cylindrique 12 de la pièce de liaison 11 et il vient en appui par l'intermédiaire d'un rebord annulaire 56 contre l'épaulement 19 du raccord 10. On rapporte ensuite le joint d'étanchéité 35 et les autres éléments du raccord, comme cela a été explicité précédemment.

Concrètement, on s'arrange pour que la surface d'extrémité libre de l'embout 2 vienne au contact de l'extrémité libre 53a de la tige 53 de l'obturateur 50 pour déplacer celle-ci et par conséquent décoller le clapet 52 de son siège 54 dans la phase finale de compression axiale du joint d'étanchéité 35, c'est-à-dire lorsque la bague de blocage 25 est déplacée pour immobiliser axialement le raccord 10. Bien entendu, pour conserver un flexible de type symétrique, un obturateur 50 est monté à l'autre extrémité du tube gaz 1. Une telle sécurité est suffisante, côté cuisinière, car si le raccord 10 associé n'est pas correctement monté, l'obturateur 50 restera en position fermée. Par contre, pour obtenir une sécurité optimale, côté robinet, il faut prévoir un second obturateur 50 à l'intérieur de l'embout 2 commandé un synchronisme avec le premier obturateur. Un tel montage est à la portée de l'Homme de métier.

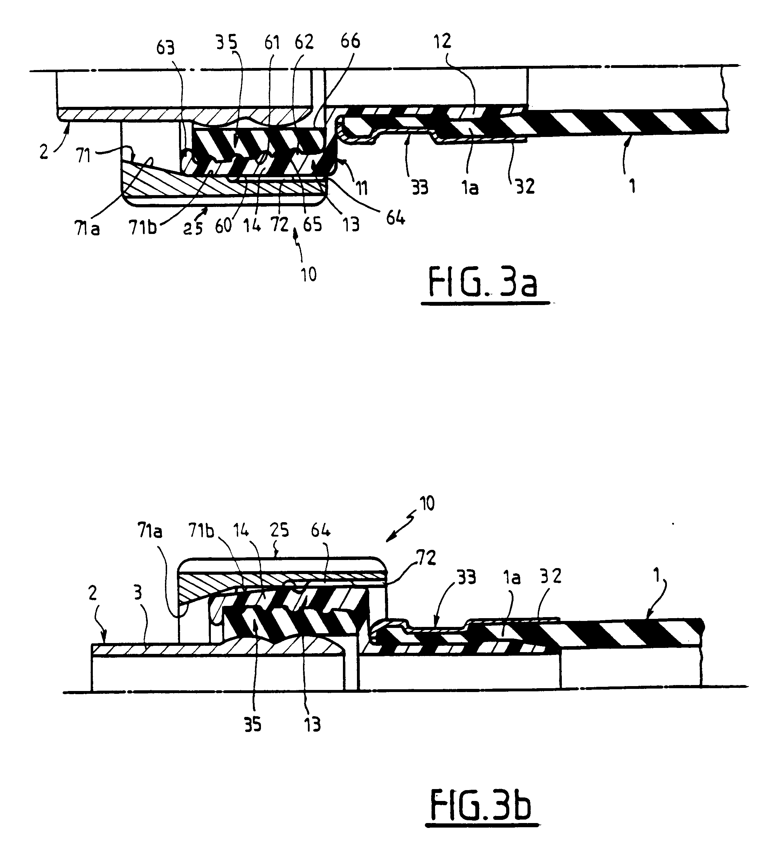

Selon le second mode de réalisation de l'Invention tel que représenté aux figures 3a et 3b, l'ensemble des doigts 14 de la griffe 13 délimite une enveloppe périphérique externe 60 de forme globalement cylindrique et une enveloppe périphérique interne 61 de forme globalement tronconique qui s'évase vers l'extérieur en direction des extrémités libres des doigts 14. Chaque doigt 14 présente sur sa face interne plusieurs dents 62 par exemple régulièrement espacées les unes des autres, un rebord radialement interne 63 à son extrémité libre, et un filetage 64 sur sa face externe, du côté de l'élément tubulaire 12 de la pièce de liaison 11.

Le joint d'étanchéité 35 est de forme annulaire et présente une surface périphérique externe 65 ayant une forme tronconique complémentaire de celle formée par les doigts 14, et une surface périphérique interne 66 de forme cylindrique.

La bague de blocage 25 présente une surface périphérique interne 71 en deux parties, une partie de forme tronconique 71a, côté about 2, prolongée par une partie de forme cylindrique 71b présentant un taraudage 72.

Le raccord 10 est préassemblé à une extrémité du tube gaz de la façon suivante. Comme pour le premier mode de réalisation, l'embout tubulaire 12 de la pièce de liaison 11 est emmanché à force dans l'extrémité 1a du tube gaz 1 et une douille 32 est sertie comme précédemment pour obtenir une meilleure solidarisation entre l'élément tubulaire 12 et le tube 1.

Le joint d'étanchéité 35 est engagé à force entre les doigts 14, et il vient à ses deux extrémités respectivement en contact avec l'épaulement 19 et la butée 63 formée par l'ensemble des rebords des doigts 14, les dents 62 de ces derniers pénétrant dans la surface périphérique externe du joint 35.

La bague de blocage 25 est ensuite rapportée axialement sur la griffe 13, et par rotation elle se visse sur la griffe par suite de la coopération positive entre le filetage 64 des doigts 14 et le taraudage 72 de la bague 25. Il en résulte un déplacement axial de la bague 25 en direction du tube 1, et le mouvement de rotation est arrêté dès que l'on sent une résistance, c'est-à-dire à partir du moment où les extrémités libres des doigts 14 viennent au contact de la surface tronconique interne 71 de la bague 25.

La bague 25 étant ainsi pré-positionnée, comme cela est représenté à la figure 3a, et le raccordement du raccord 10 sur l'embout 2 s'effectue comme suit. L'extrémité annelée de l'embout 2 est engagée librement à l'intérieur du raccord 10, puis la bague de blocage 25 est à nouveau vissée par rotation sur le filetage 64 des doigts 14 de la griffe 13. Le déplacement axial de la bague 25 provoque un effort de compression radiale sur l'ensemble des doigts 14 par la réaction provoquée par la surface tronconique 71a de la bague 25 mise progressivement en contact avec la surface périphérique externe des doigts 14. Il en résulte une déformation progressive du joint d'étanchéité 35 qui vient au niveau de sa surface périphérique interne épouser la forme annelée de l'embout 2, comme cela est représenté à la figure 3b. Dans ce cas, la bague 25 agit à la manière d'une bague-écrou.

Dans ce second mode de réalisation, le joint d'étanchéité 35 est par exemple constitué d'élastomère, d'élastomère thermoplastique ou d'un matériau composite, et il doit résister au couple de torsion dû au serrage de la bague 25.

Comme pour le premier mode de réalisation, un raccord identique 10 est monté à l'autre extrémité du tube gaz 1.

Bien évidemment, l'Invention ne se limite pas au mode de réalisation qui a été décrit précédemment et donné à titre d'exemple, mais elle inclut notamment les équivalents techniques des moyens décrits sans pour autant sortir du cadre de la présente Invention. En particulier, en liaison avec le premier mode de réalisation, une seule dent 16a peut être prévue au niveau de chaque doigt 14 de la griffe 13. Avec une telle configuration, il est possible pour un même raccord 10 de pouvoir se monter indifféremment sur des abouts gaz de 12 et de 15 mm (ancienne et nouvelle normes). Il en est de même pour le dispositif de raccordement selon le second mode de réalisation, mais sans lui apporter de modification au niveau de sa structure. L'élément tubulaire 12 et la griffe 13 formant la pièce de liaison 11 du raccord 10 peuvent constituer une seule pièce en matière plastique par exemple venue de moulage, ou être deux pièces distinctes assemblées l'une à l'autre par tout moyen approprié. Enfin, le dispositif de raccordement selon le second mode de réalisation peut être monté sur des embouts de forme quelconque et dans des domaines d'application non limités à la distribution du gaz à usage domestique.

**Revendications**

1. Dispositif de raccordement d'une extrémité d'un tube en caoutchouc sur un embout, du type constitué par un raccord comprenant une pièce de liaison formée d'un élément tubulaire destiné à être raccordé à l'extrémité du tube, et d'une griffe qui prolonge axialement l'élément tubulaire et qui comporte plusieurs doigts axiaux, un joint d'étanchéité annulaire logé à l'intérieur de la griffe et une bague de blocage à déplacement axial montée autour de la griffe, caractérisé en ce que la surface périphérique interne de la bague de blocage (25) présente une partie tronconique (30;71a) et une partie cylindrique (26,71b) axialement alignées et dans le prolongement l'une de l'autre, la partie tronconique (30,71a) étant destinée à prendre progressivement appui sur la surface périphérique externe des doigts (14) pour les comprimer radialement sur l'embout lors du déplacement axial de la bague de blocage (25).

2. Dispositif de raccordement selon la Revendication 1 pour un embout de type annelé, caractérisé en ce que chaque doigt (14) de la griffe présente au moins une dent interne (16a) destinée à venir se loger au fond d'une encoche (7) délimitée au niveau de la partie annelée de l'embout (2).

3. Dispositif selon la Revendication 2, caractérisé en ce que chaque doigt (14) présente au moins, en direction de son extrémité libre, deux redans (15), (16) successifs qui délimitent des première et seconde dents internes (15a), (16a) distantes d'une longueur *l*.

4. Dispositif de raccordement selon la Revendication 2 ou 3, caractérisé en ce que les doigts sont raccordés à l'élément tubulaire (12) par une zone annulaire radiale (18) délimitant un épaulement (19) contre lequel vient en appui le joint d'étanchéité (35) axialement comprimé par la surface d'extrémité libre de l'embout (2).

5. Dispositif selon l'une quelconque des Revendications 2 à 4, caractérisé en ce que les doigts (14) de la griffe (13) délimitent une surface périphérique externe (20) de forme tronconique.

6. Dispositif selon la Revendication 5, caractérisé en ce que le déplacement axial de la bague de blocage (25) en direction de l'embout (2) entraîne une action positive entre la surface tronconique (36) de la bague (25) et la surface tronconique (20) de la griffe (13) pour serrer radialement la griffe (13) sur l'embout (2), et une compression axiale complémentaire du joint d'étanchéité (35) sur lequel vient en appui la surface d'extrémité libre de l'embout (2).

7. Dispositif selon l'une quelconque des Revendications précédentes, caractérisé en ce qu'il comprend également un dispositif de verrouillage (40), (41) destiné à verrouiller la bague (25) en position de blocage.

8. Dispositif de raccordement selon la Revendication 7, caractérisé en ce que le dispositif de verrouillage est constitué par des pions (40) prévus à la surface périphérique des doigts (14) et des ouvertures (41) prévues dans la bague (25), ces pions (40) se logeant respectivement dans les ouvertures (41) lorsque la bague (35) est en position de blocage.

9. Dispositif de raccordement selon la Revendication 1, caractérisé en ce que le joint d'étanchéité (35) est monté entre les doigts (14) de la griffe (13) et l'embout (2) pour être radialement comprimé par la bague de blocage (25).

10. Dispositif de raccordement selon la Revendication 9, caractérisé en ce que la surface périphérique externe des doigts (14) présente un filetage, en ce que la surface périphérique externe de la bague (25) présente un taraudage complémentaire, et en ce que la bague (25) se déplace axialement par rotation autour des doigts (14) de la griffe (13).

11. Dispositif de raccordement selon la Revendication 10, caractérisé en ce que la surface périphérique interne des doigts (14) délimite une enveloppe globalement tronconique, et en ce que le joint d'étanchéité (35) présente une surface périphérique externe ayant une forme tronconique complémentaire de celle présentée par la surface périphérique interne des doigts (14).

12. Dispositif de raccordement selon la Revendication 10 ou 11, caractérisé en ce que la surface périphérique interne des doigts (14) comporte des dents (62) destinées à s'engager dans la surface périphérique externe du joint d'étanchéité (35).

FIG.1a

FIG.1b

FIG.2

FIG. 3a

FIG.3b

Office européen
des brevets

**RAPPORT DE RECHERCHE EUROPEENNE**

Numéro de la demande

EP    92 40 0635

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-342 467 (SOCIETE VERGE ET CIE.) | 1,2,4-9 | F16L33/22 |
| A | * le document en entier * | 3,11,12 | F16L37/12 |
| | --- | | |
| Y | EP-A-0 091 773 (G.S.E SCHMIDT) | 1,2,4-9 | |
| | * figures 1,2,7,8 * | | |
| | --- | | |
| A | FR-A-360 241 (LEVET & VERGE) | 1-9,11, 12 | |
| | * le document en entier * | | |
| | --- | | |
| A | US-A-4 103 941 (K. STOLL) | 1 | |
| | * colonne 3, ligne 54 – ligne 62; figure 6 * | | |
| | ----- | | |

DOMAINES TECHNIQUES RECHERCHES (Int. Cl.5)

F16L

Le présent rapport a été établi pour toutes les revendications

| Lieu de la recherche | Date d'achèvement de la recherche | Examinateur |
|---|---|---|
| LA HAYE | 24 AVRIL 1992 | BUDTZ-OLSEN A. |

EPO FORM 1503 03.82 (P0402)